(19) Europäisches Patentamt

European Patent Office

Office européen des brevets

(11) **EP 1 350 666 B1**

(12) **EUROPÄISCHE PATENTSCHRIFT**

(45) Veröffentlichungstag und Bekanntmachung des Hinweises auf die Patenterteilung:
**04.01.2006 Patentblatt 2006/01**

(51) Int Cl.:
***B60M 3/06*** *(2006.01)*

(21) Anmeldenummer: **02007785.5**

(22) Anmeldetag: **06.04.2002**

(54) **Schaltungsanordnung und Verfahren zur Stromeinspeisung in eine und Rückspeisung aus einer Fahrleitung**

Circuit arrangement and method for current supply to and recovery from a contact line

Ensemble circuit et méthode pour alimentation et récupération électrique d'une ligne de contact

(84) Benannte Vertragsstaaten:
**AT BE CH CY DE DK ES FI FR GB GR IE IT LI LU MC NL PT SE TR**

(43) Veröffentlichungstag der Anmeldung:
**08.10.2003 Patentblatt 2003/41**

(73) Patentinhaber: **SEMIKRON Elektronik GmbH & Co. KG**
**90431 Nürnberg (DE)**

(72) Erfinder: **Schreiber, Dejan**
**90513 Zirndorf (DE)**

(56) Entgegenhaltungen:
**FR-A- 2 316 773 FR-A- 2 417 408**
**JP-A- 11 286 229**

**Beschreibung**

Die Erfindung beschreibt eine Schaltungsanordnung zur Stromeinspeisung in eine Fahrleitung zur Energieversorgung elektrisch angetriebenerer Fahrzeuge aus einem in der Regel 3-phasigen Wechselstromversorgungsnetz sowie zur Rückspeisung von Energie aus der Fahrleitung in das Wechselstromversorgungsnetz.

((Stand der Technik und seine Nachteile))

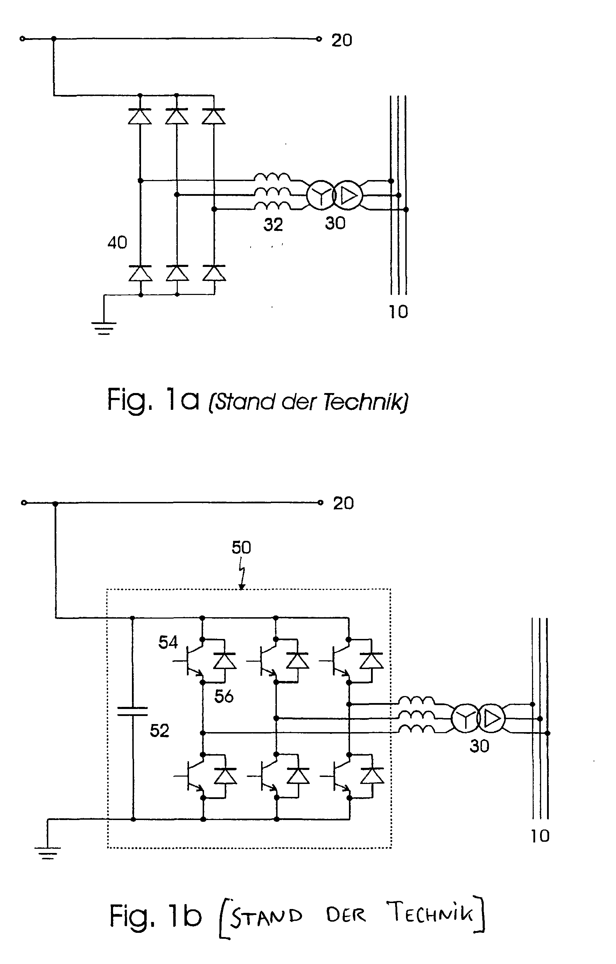

Es sind Fahrleitungen bekannt, vorzugsweise als Oberleitungen ausgebildet, zur Energieversorgung schienengebundener Fahrzeuge, wie Straßenbahnen, oder auch nicht schienengebundener Fahrzeuge, wie sog. Trolleybusse. Derartige Fahrleitungen sind vorteilhafterweise als einphasige Gleichstromleitungen ausgeführt. Gespeist werden diese Fahrleitungen nach dem Stand der Technik aus einem meist dreiphasigen Mittelspannungsnetz mit einer Frequenz von 50Hz oder 60Hz sowie Spannungen im Bereich von 10kV. Fig. 1a zeigt ein Einspeisung in eine Fahrleitung nach dem Stand der Technik. Hierbei ist die Primärseite eines Transformators (30) mit dem Wechselspannungsversorgungsnetzes (10) verbunden. Die Sekundärseite des Transformators ist über Drosseln (32), die auch Bestandteil des Transformators selbst sein können, mit einem 3-Phasen- Diodengleichrichter (40) verbunden. Mit dieser Schaltungsanordnung wird in der Fahrleitung eine pulsierende Gleichspannung $U_s$ von z.B. 750V erzeugt, wobei hier Schwankungen von $\pm$ 20% dem Stand der Technik entsprechen. Dieser Diodengleichrichter ist direkt mit der Fahrleitung verbunden.

Die nach dem Stand der Technik zur Energieversorgung der Fahrleitungen eingesetzten Diodengleichrichter zeichnen sich durch ihre einfach und robuste Konstruktion aus. Gleichzeitige sind diese äußerst kontengünstig. Diese Kriterien sind notwendig, da die Fahrleitungen, z.B. von Straßenbahnen, häufig in Abschnitte der Größenordnung Kilometer eingeteilt werden, wobei jeder dieser Abschnitte eine eigene dezentrale Energieversorgung aufweist. Um die Kosten gering zu halten und eine sicher Energieversorgung zu gewährleisten muss diese somit robust und kostengünstig gestaltet werden.

Energieversorgungen wie sie in Fig. 1a dargestellt und oben beschrieben sind werden beispielhaft auf eine zu übertragende Nennleistung $W_D$ von 1 MWausgelegt, wobei eine Überlastfähigkeit bis zum dreifachen der Nennleistung ebenfalls dem Stand der Technik entspricht.

Im Fahrbetrieb, d.h. wenn ein Fahrzeug auf einem Streckenabschnitt Energie aus der Fahrleitung entnimmt sinkt die aktuelle Spannung $U_F$ der Fahrleitung auf Grund von Spannungsabfällen im Diodengleichrichter, der Fahrleitung selbst sowie im Fahrzeug, um einige Prozent.

Im Bremsbetrieb, d.h. wenn ein Fahrzeug kinetische Energie abbauen muss, speisen Fahrzeuge nach dem Stand der Technik zumindest einen Teil dieser Bremsenergie in die Fahrleitung zurück. Hierbei steigt die Spannung $U_F$ in der Fahrleitung kontinuierlich an. Falls diese Spannung einen festen Wert $U_{max}$ überschreitet wird Energie in einem Bremswiderstand, der sich nach dem Stand der Technik im Fahrzeug selbst befindet, vernichtet. Alternativ kann diese Energie auch in einem weiteren Fahrzeug verbraucht werden, falls sich in dem gleichen Streckenabschnitt ein weiteres Fahrzeug im Fahrbetrieb befindet. Die aus Fahrzeugen in einem Fahrzyklus, bestehend aus Beschleunigen, Fahren mit konstanter Geschwindigkeit, Bremsen und Stillstand, in die Fahrleitung rückgespeiste Energie beträgt bis zu 25% der im Fahrzyklus aufgenommenen Energie.

Nachteil bei einer Energieversorgung einer Fahrleitung mittels eine Schaltungsanordnung nach Fig. 1a ist, dass Energie nur vom Versorgungsnetz zur Fahrleitung fließen kann. Die Bremsenergie von Fahrzeugen wird daher in der Regel vernichtet, falls kein weiteres Fahrzeug im gleichen Streckenabschnitt diese Energie verbraucht.

Bekannt sind weiterhin Vier- Quadranten- Stromrichter in verschiedensten Ausgestaltungen. Bei deren Einsatz als Energieversorgung einer Fahrleitung wird der Diodengleichrichter ersetzt durch eine 3-Phasen- Brückenschaltung (50) nach dem Stand der Technik, wie dies in Fig. 1b gezeigt ist.

Vorteilhaft an dieser Schaltungsanordnung ist die Möglichkeit zur Rückspeisung aus der Fahrleitung (20) in das Versorgungsnetz (10).

Eine derartige Schaltungsanordnung zur Energieversorgung ist allerdings aus folgenden Gründen wenig vorteilhaft:

- Der Zwischenkreiskondensator (52), bzw. die Zwischenkreiskondensatoren, sind dauerhaft dem pulsierenden Gleichstrom der Fahrleitung (20) ausgesetzt. Dies ist für die Lebensdauer dieser Kondensatoren schädlich.

- Anstelle der speziellen sog. Netzdioden im Diodengleichrichter der Fig. 1 a müssen auf die Leistungsschalter (54) abgestimmte Freilaufdioden (56) eingesetzt werden.

- Zudem wäre die 3-Phasen- Brückenschaltung, aufgebaut aus Standardkomponenten, für die Rückspeiseleistungen in das Versorgungsnetz überdimensioniert und damit unwirtschaftlich.

Die FR 2 316 773 offenbart eine Schaltungsanordnung zur Stromeinspeisung in eine Fahrleitung zur Energieversorgung elektrisch angetriebener Fahrzeuge aus einem 3-phasigen Wechselstromversorgungsnetz sowie zur Rückspeisung aus der Fahrleitung in das Wechselstromversorgungsnetz. Die Schaltungsanordnung besteht aus einem Transformator mit zwei Sekundärwicklungen, einem direkt mit der Fahrleitung verbundenen Diodengleichrichter zum Energiefluss in die Fahrleitung und einem Wechselrichter. Dieser Wechselrichter wird angesteuert durch eine Überwachungsschaltung, die den Wechselrichter nur dann in Betrieb nimmt, wenn der Stromfluss durch den Diodengleichrichter zu Null detektiert wird und wenn weiterhin die Spannung in der Fahrleitung einen definierten Wert überschreitet.

Nachteilig hierbei ist, dass in einer aufwändigen Schaltung ein Strom detiektiert werden muss und weiterhin darin, dass dieser Strom zu Null detektiert werden muss.

((Aufgabe))

Die vorliegende Erfindung hat die Aufgabe, eine Schaltungsanordnung vorzustellen, die Energie aus einem Versorgungsnetz in die Fahrleitung für elektrisch angetriebene Fahrzeuge einspeist, sowie die Bremsenergie der Fahrzeuge aus der Fahrleitung in das Versorgungsnetz zurückspeist und in bestehende Versorgungsschaltungsanordnung integriert werden kann, deren Funktionsweise nicht beeinträchtigt und derart dimensioniert ist, dass die Bremsenergie zu wesentlichen Teilen in das Versorgungsnetz zurückgespeist werden kann.

((Lösung der Aufgabe))

Die Aufgabe wird gelöst durch die Maßnahmen des Anspruchs 1. Weitere vorteilhafte Ausgestaltungen sind in den Unteransprüchen genannt.

Der Grundgedanke der Erfindung ist, die Schaltungsanordnung zur Stromeinspeisung in eine Fahrleitung nach dem Stand der Technik unverändert zu belassen sowie parallel hierzu eine Schaltungsanordnung zur Rückspeisung in das Versorgungsnetz vorzusehen, wobei diese Schaltungsanordnung zur Rückspeisung weniger als die halbe, vorzugsweise ein Viertel, der Nennleistung des Diodengleichrichters aufweist. Diese Schaltungsanordnung zur Rückspeisung besteht aus einem Wechselrichter und einer zusätzliche Diode, deren Anode mit der Fahrleitung verbunden ist und deren Kathode mit dem Zwischenkreis des Wechselrichters verbunden ist.

Der Wechselrichter weist eine Leistungsfähigkeit auf, die maximal der Hälfte der Nennleistungsfähigkeit des Diodengleichrichters entspricht, da wie oben beschrieben im Mittel etwa ein Viertel der während eines Fahrzyklus aufgenommenen Energie aus dem Fahrzeug in die Fahrleitung zurückgespeist wird und nur diese Energie zu Rückspeisung in das Versorgungsnetz zur Verfügung steht. Abhängig von dem Anteil zu dem die anfallenden Bremsenergie in der Fahrleitung in das Versorgungsnetz zurückgespeist werden soll ist der Wechselrichter entsprechend auszulegen:

Die Aufgabe der zusätzlichen Diode liegt in der Entkopplung des Zwischenkreises des Wechselrichters und der Fahrleitung. Da an der Fahrleitung während des Stillstandes oder während der Fahrt eines dort befindlichen Fahrzeuges ein pulsierender Gleichstrom anliegt, würde bei einem direkten Anschluss des Zwischenkreises an die Fahrleitung dieser pulsierende Gleichstrom auch an dem Zwischenkreis und somit an dessen Kondensatoren anliegen. Dieser pulsierende Gleichstrom ist allerdings der Lebensdauer der Zwischenkreiskondensatoren abträglich, da sie mit der Frequenz der pulsierenden Gleichspannung dauerhaft teilweise geladen und wieder entladen würden.

Zur weiteren Erläuterung der erfinderischen Schaltungsanordnung wird der Fahrzyklus eines Fahrzeuges in vier Bereiche zerlegt: Stillstand, Beschleunigungsphase, Fahrt mit konstanter Geschwindigkeit und Bremsphase. Während des Stillstandes des Fahrzeuges fließt keine Energie, weder aus noch in das Versorgungsnetz.

Während der Beschleunigungsphase sowie während der Fahrt fließ die hierfür benötigte Energie durch den Diodengleichrichter aus dem Versorgungsnetz in die Fahrleitung. Die Rückspeiseeinheit ist inaktiv. Hierbei schwankt die Spannung im Versorgungsnetz innerhalb der vorgegebenen Toleranzen von ca. 20% um den Nennwert.

Während der Bremsphase ist der Diodengleichrichter inaktiv, weil die Spannung in der Fahrleitung höher ist als die Spannung die der Diodengleichrichter liefern könnte. Stellt die übergeordnete Steuereinrichtung fest, dass der Wert der Spannung in der Fahrleitung, der durch aus dem Fahrzeug rückgespeiste Spannung erhöht wird, den aktuell aus dem Versorgungsnetz vor dem Gleichrichter gemessenen und mit einem Korrekturfaktur versehenen (gleichgerichteten) um eine definierte Anschaltschwelle überstiegen, wird die Rückspeisung von Energie aus der Fahrleitung in die Versorgungsleitung mittels des Wechselrichters begonnen. Diese Rückspeisung endet sobald bei oben genanntem Vergleich eine Abschaltschwelle unterschritten wird. Es handelt sich bei den An- bzw. Abschaltwerten somit um dynamische Werte, die erst durch den beschriebenen Vergleich gebildet werden.

Der Wechselrichter kann abhängig von seiner Dimensionierung bis zu 100% der während einer Bremsphase anfallenden Energie in guter Qualität, d.h. weitestgehend sinusförmig mit geringem Oberwellenanteil, in das Versorgungsnetz zurückspeisen. Vorteilhaft an der erfinderischen Ausgestaltung ist hierbei:

• Der Aufbau und die Funktionalität der Gleichrichters bleiben unverändert erhalten. Der Aufbau und die Funktionalität des Fahrzeuges bleiben ebenfalls unverändert erhalten, da die Rückspeisung bereits dynamisch bei geringeren Spannungswerten aktiviert wird verglichen mit der konstanten Einschaltspannung des Bremswiderstandes.

- Der Wechselrichter kann auch in bestehende Versorgungssysteme für Fahrleitungen nachgerüstet werden.

- In einem Fahrleitungsnetz kann nur in denjenigen Abschnitten ein Wechselrichter eingesetzt bzw. nachgerüstet werden in denen signifikant Bremsenergie erzeugt wird.

- Durch die geeignete Dimensionierung des Wechselrichters auf eine geringere Leistung im Vergleich zur Nennleistung des Diodengleichrichter ist die Ausstattung mit einer Rückspeiseeinheit für das Versorgungsnetz wirtschaftlich sinnvoll.

Der Wechselrichter kann weitere Aufgaben erfüllen, wie beispielhaft die Blindleistungskompensation für das Versorgungsnetz oder eine Verbesserung des Klirrfaktors des Versorgungsnetzes.

((Ausführungsbeispiel/e))

Spezielle Ausgestaltungen der erfinderischen Lösungen werden an Hand der Fig. 2 bis 6 näher erläutert.

Fig. 2 zeigt eine erfinderische Schaltungsanordnung mit einem Wechselrichter.

Fig. 3 zeigt schematisch den Spannungsverlauf in der Fahrleitung während eines Fahrzyklus.

Fig. 4 zeigt eine erfinderische Schaltungsanordnung mit mehreren parallel angeordneten 3-phasen Wechselrichterzellen.

Fig. 5 zeigt eine erfinderische Schaltungsanordnung mit zwei seriell angeordneten 3-phasen Wechselrichterzellen.

Fig. 6 zeigt eine erfinderische Schaltungsanordnung mit mehreren matrixartig angeordneten 3-phasen Wechselrichterzellen.

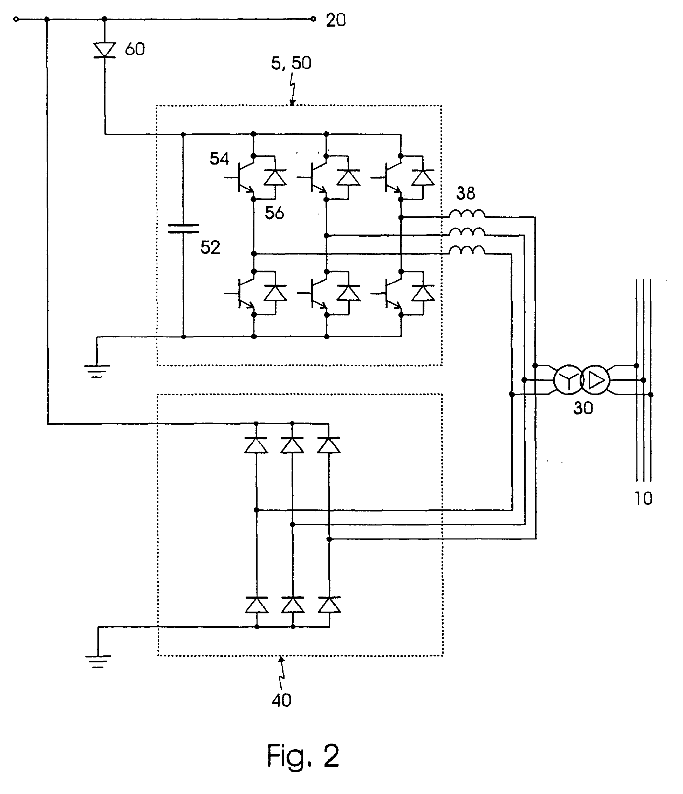

Fig. 2 zeigt eine erfinderische Schaltungsanordnung bestehend aus einer (nicht gezeichneten) Steuereinheit, einem 3-phasigen Versorgungsnetz (10), einer Fahrleitung (20), einem Transformator (30), einem Diodengleichrichter (40), einem Wechselrichter (5, 50) und einer Diode (60). Der Transformator ist, primärseitig mit dem Wechselspannungsversorgungsnetz (10) verbunden. Sekundärseitig ist der Transformator mit dem Eingang des Diodengleichrichters (40) verbunden. Der Ausgang des Diodengleichrichters ist direkt mit der Fahrleitung (20) verbunden. Dieser Teil der Schaltungsanordnung dient wie beim Stand der Technik (vgl. Fig. 1) zur Energieversorgung der Fahrleitung (20).
Zur Rückspeisung von Energie aus der Fahrleitung (20) in das Versorgungsnetz (10) ist die Fahrleitung über eine Diode mit einem Wechselrichter (5, 50) verbunden. Hierbei ist die Anode der Diode (60) mit der Fahrleitung und ihre Kathode mit dem Zwischenkreis des Wechselrichters (5, 50) verbunden. Der Wechselrichter besteht aus einem Zwischenkreiskondensator (52) sowie drei Halbbrückenschaltungen, einer je Phase. Diese Halbbrücken bestehen ihrerseits aus zwei Leistungshalbleiterschaltern mit antiparallel geschalteten Freilaufdioden. Die Leistungsschalter sind nach dem Stand der Technik IGBTs (insulated gate bipolar transitoren). Der Mittenabgriff jeder Halbbrücke ist über eine Drossel (38) mit der Sekundärseite des Transformators (30) verbunden. Der Transformator dient somit sowohl zur Transformation der Spannungen der Versorgung als auch der Rückspeisung.
Die Diode (60) entkoppelt, wie oben bereits beschrieben, den Zwischenkreis und die Fahrleitung (20), um den Zwischenkreiskondensator (52) nicht mit den Spannungsschwankungen der Fahrleitung zu beaufschlagen. Der Zwischenkreis wird somit auf den aktuellen Scheitelwert $\hat{U}_F$ der Fahrleitungsspannung $U_F$ geladen.
Eine derartige Schaltungsanordnung kann beispielsweise folgende Kenngrößen aufweisen:

| | |
|---|---|
| Spannung der Fahrleitung (ohne Fahrbetrieb) | $U_s = 750V \pm 20\%$ |
| ⇒ Minimalspannung in der Fahrleitung | $U_{S,mim} = 600V$ |
| ⇒ Maximalspannung in der Fahrleitung | $U_{s,max} = 900V$ |
| Maximal zulässiger Wert der Fahrspannung $U_F$ (bei diesem Wert wird der Bremswiderstand aktiviert) | $U_{max} = U_{S,max} + 100V$ |
| Additive Schwelle zum Beginn der Rückspeisung | $\Delta U_{Rstart} = 100V$ |
| Additive Schwelle zum Ende der Rückspeisung | $\Delta U_{Rstop} = 50V$ |

Tabelle fortgesetzt

| Dynamische Anschaltschwelle, bei der eine Rückspeisung aus der Fahrleitung in das Versorgungsnetz beginnt | $U_{Rstart} = \hat{U}_F + \Delta U_{Rstart}$ |
|---|---|
| Dynamische Abschaltschwelle, bei der eine Rückspeisung aus der Fahrleitung in das Versorgungsnetz endet | $U_{Rstop} = \hat{U}_F + \Delta U_{Rstop}$ |
| Versorgungsspannung | $U_N = 10\text{kV (bei 50Hz)}$ |
| Nennleistung des Diodengleichrichters | $W_D = 1\text{ MW}$ |
| Maximalleistung des Wechselrichters | $W_R = 350\text{kW}$ |

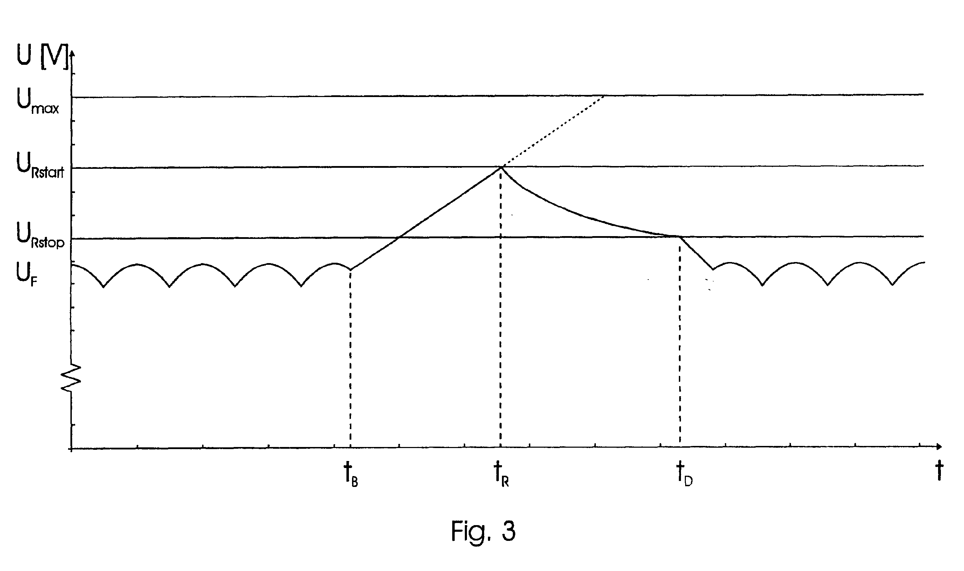

Fig. 3 zeigt schematisch den Spannungsverlauf in der Fahrleitung während eines Fahrzyklus bei Einsatz einer erfinderischen Schaltungsanordnung nach Fig. 2, wobei auch die Kenngrößen denen in der Beschreibung der Fig. 2 folgen. Auf der Abszisse ist hierbei der zeitliche Verlauf in beliebigen Einheiten aufgetragen, auf der Ordinate ist die Spannung in Volt aufgetragen. $U_F$ zeigt den Spannungsverlauf in der Fahrleitung.

Im Zeitraum bis $t = t_B$ ist die Fahrt eines Fahrzeug mit konstanter Geschwindigkeit gezeigt. Der Verlauf der Spannung in der Fahrleitung $U_F$ zeigt hierbei den typischen pulsierenden Verlauf. Beispielhaft soll hier angenommen werden, dass $\hat{U}_F$ einen Wert von 700V, der innerhalb der Toleranz liegt annimmt. Diese Spannung liegt ebenfalls am Zwischenkreis des Wechselrichters (5) an, da dieser über die Diode (60) direkt aus der Fahrleitung versorgt wird.

Im Zeitraum $t_B$ bis $t_D$ ist eine Bremsphase gezeigt, wobei die Bremsung nicht zum Stillstand des Fahrzeuges führt. Die Spannung in der Fahrleitung $U_F$ steigt infolge der Rückspeisung von Bremsenergie aus dem Fahrzeug in die Fahrleitung sowie über die Diode (60) in den Zwischenkreis des Wechselrichters. Die Spannung würde nach dem Stand der Technik bis zu einem Maximalwert $U_{max}$ ansteigen (gestrichelte Linie), anschließend würde die Bremsenergie in einem Bremswiderstand vernichtet werden. Bei der erfinderischen Schaltungsanordnung steigt die Spannung in der Fahrleitung ebenfalls, allerdings beginnt zum Zeitpunkt $t_R$, geregelt durch eine übergeordnete Steuerung, ab einem dynamischen Spannungswert $U_{Rstart}$ der Wechselrichter Energie aus der Fahrleitung in das Versorgungsnetz zurückzuspeisen.

Der Wert der dynamischen Schaltschwelle $U_{Rstart}$ bestimmt sich folgendermaßen:

Verglichen werden der Wert der Spannung im Zwischenkreis (identisch mit $\hat{U}_F$) mit dem errechneten Wert $U_G$ der Gleichspannungsversorgung. $U_G$ seinerseits wird errechnet aus den am Eingang des Diodengleichrichters anliegenden Spannungen $U_{in}$ mittels eines Korrekturfaktors, der sich aus der bekannten Formel

$$U_G = \frac{3}{\pi} \cdot \sqrt{2} \cdot U_{in} \approx 1{,}35 \cdot U_{in}$$

ergibt. Falls nun $\hat{U}_F = U_G + \Delta U_{Rstart}$ erreicht, in diesem Beispiel $\hat{U}_F = 800V$, beginnt die Rückspeisung.

Der Rückspeisvorgang endet zum Zeitpunkt $t_D$ sobald ein unterer dynamischer Spannungswert $U_{Rstop}$ erreicht ist, in diesem Beispiel bei $\hat{U}_F = 750V$. Hier beendet die übergeordnete Steuerung die Rückspeisung mittels des Wechselrichters.

Durch den weiteren Fahrbetrieb zeigt die Spannung $U_F$ ab dem Zeitpunkt $t_D$ nach Verbrauch einer Restenergie wiederum den bekannten pulsierenden Verlauf.

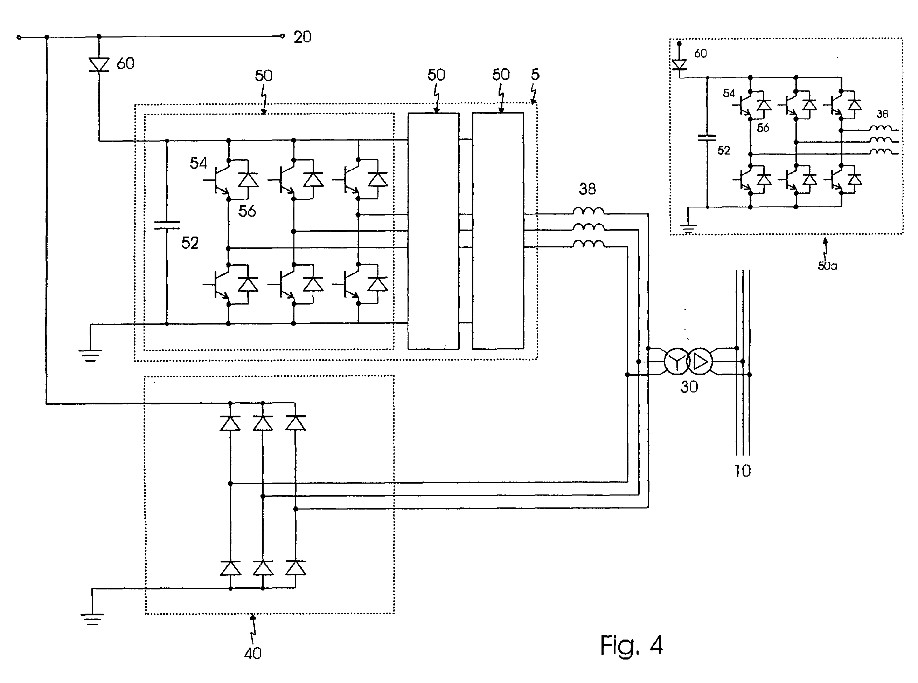

Fig. 4 zeigt eine erfinderische Schaltungsanordnung für im Vergleich zur Fig. 2 höheren Leistungen des Wechselrichters (5). Hierzu werden vorteilhafterweise eine Mehrzahl, hier drei, identische 3-phasen Wechselrichter (50), sog. Zellen, parallel angeordnet. Die hier vorgestellte Schaltungsanordnung ist dimensioniert für folgende Kenngrößen:

| Nennleistung des Diodengleichrichters | $W_D = 3\text{MW}$ |
|---|---|
| Maximalleistung des Wechselrichters | $W_R = 1{,}05\text{MW (= 3 x 350kV)}$ |

Die weiteren Kenngrößen sind identisch mit denen aus Fig. 2. Der Transformator (30), der Diodengleichrichter (40), sowie die Diode (60) sind der höheren Leistung angepasst, unterscheiden sich in ihrer Funktionalität jedoch nicht von denjenigen aus Fig. 2. Die drei 3-phasigen Wechselrichterzellen sind parallel geschaltet, wobei in jeder Wechselrichterzelle (50) die Mittelabgriffe der Halbbrücken für die jeweilige Phase miteinander verbunden sind.

Eine weitere vorteilhafte Ausgestaltung der parallelen Anordnung wird dadurch erreicht, dass eine Zelle nicht nur aus dem Zwischenkreiskondensator und den drei Halbbrücken besteht, sondern die Zelle (50a) eine Einheit aus Diode (60), Zwischenkreiskondensator (52) den drei Halbbrücken und den zum jeweiligen Mittenabgriff zugehörigen Drosseln (38) besteht. Vorteilhaft hierbei ist, dass für höher Leistungen komplette funktionale Blöcke (50a) aneinandergereiht werden können, ohne Dioden oder Drosseln neu zu dimensionieren.

Vorteilhaft an beiden Ausführungen mit mehreren 3-phasigen Wechselrichterzellen (50, 50a) ist, dass der Ausfall einer Zelle nicht zum Ausfall der gesamten Rückspeisefunktionalität führt, sondern nur die maximal rückzuspeisende Energie entsprechend, hier auf zwei Drittel, verringert wird.

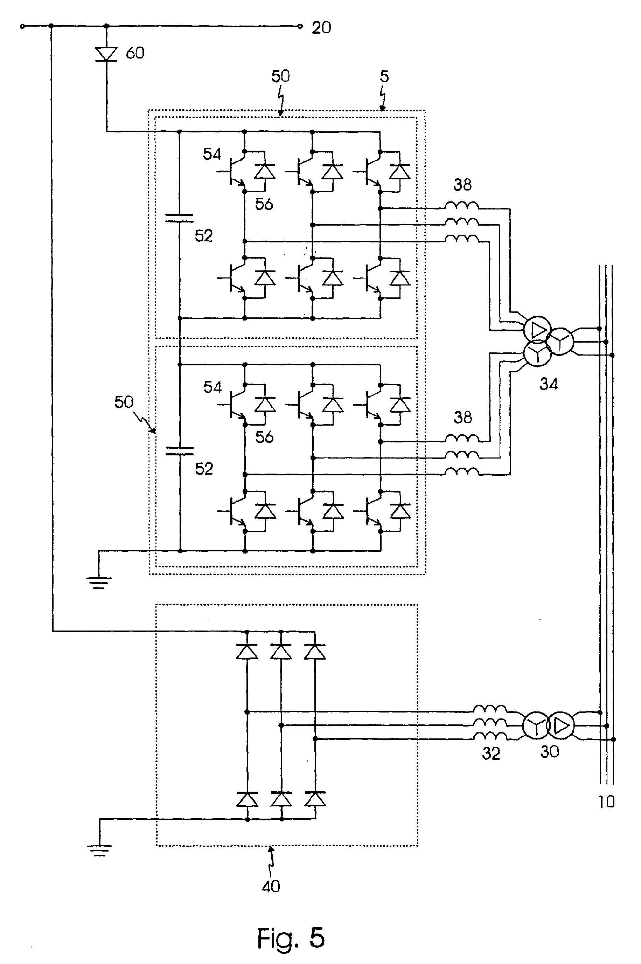

Fig. 5 zeigt eine erfinderische Schaltungsanordnung für im Vergleich zur Fig. 2 höheren Spannung in der Fahrleitung, wie sie beispielsweise in Nahverkehrsbahnen verwendet wird. Hierbei wird keine Anordnung identisch zu Fig. 2 mit höhersperrenden Leistungshalbleiterbauelementen der Spannungsklasse 3300V verwendet, sondern vorteilhafterweise eine Mehrzahl, hier zwei, identische 3-phasen Wechselrichterzellen (50), mit Standardhalbleiterbauelementen der Spannungsklasse 1700V, seriell angeordnet. Die hier vorgestellte Schaltungsanordnung ist dimensioniert für folgende Kenngrößen:

$$\text{Spannung der Fahrleitung (ohne Fahrbetrieb)} \quad U_s = 1500V \pm 20\%$$
$$\text{Maximum der Fahrspannung } U_F \quad U_{max} = 1800V$$

Die weiteren Kenngrößen sind identisch mit denen aus Fig. 2. Wobei die Werte für die dynamischen Schaltschwellen zum Beginn bzw. Ende der Rückspeisung auf ein Zelle bzw. deren Zwischenkreisspannung bezogen sind.

Der Transformator (30) mit den Drosseln (32) ist bei dieser Schaltungsanordnung ausschließlich zur Versorgung des Diodengleichrichters (40) vorgesehen.

Der Wechselrichter besteht hier aus einer seriellen Anordnung der bekannten Zellen (50). Hierbei wird die Spannung der Fahrleitung auf die beiden Zellen (50) aufgeteilt. Dies hat den Vorteil, dass man Zellen mit Leitungshalbleiterbauelementen nach dem Stand der Technik verwenden kann, die in sehr guter Qualität für die Spannungsklassen 1200V und 1700V erhältlich sind. Die Mittenabgriffe der einzelnen Halbbrücken jede Wechselrichterzelle sind mit den Sekundärwicklungen eines Transformators (34) über zwischengeschaltete Drosseln (38) verbunden. Diese Sekundärwicklungen sind derart gestaltet, dass die in der jeweiligen Halbbrücke einer Wechselrichterzelle erzeugten Ströme und Spannungen mittels der Primärwicklung in das Versorgungsnetz zurückgespeist werden können.

Die Funktionalität der Diode (60) unterscheiden sich nicht von denjenigen aus Fig. 2.

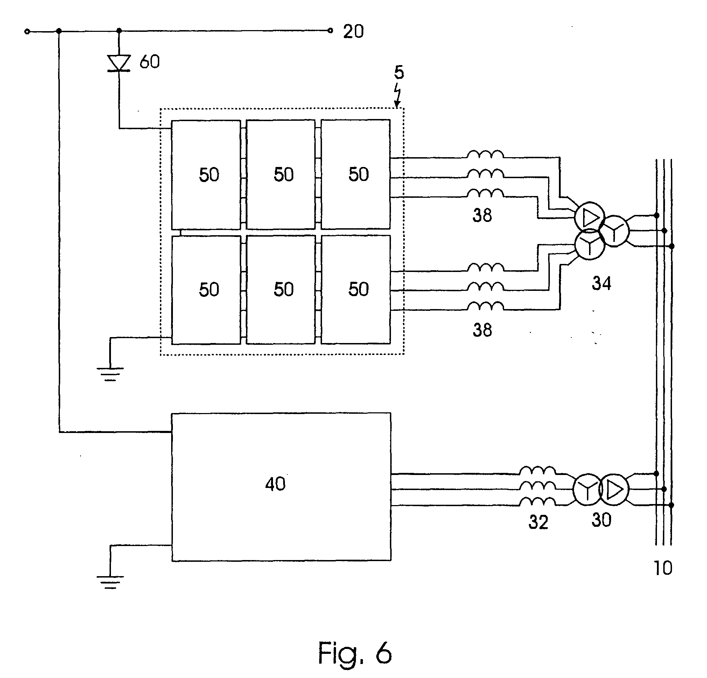

Fig. 6 zeigt eine erfinderische Schaltungsanordnung für im Vergleich zur Fig. 2 höheren Spannung in der Fahrleitung sowie ein höhere Leistung des Wechselrichters. Hierzu werden vorteilhafterweise eine Mehrzahl, hier sechs, identische 3-phasen Wechselrichterzellen (50) matrixartig angeordnet. Die hier vorgestellte Schaltungsanordnung ist dimensioniert für folgende Kenngrößen:

$$\text{Nennleistung des Diodengleichrichters} \quad W_D = 6MW$$
$$\text{Maximalleistung des Wechselrichters} \quad W_R = 2,1 \, MW$$

Die weiteren Kenngrößen sind denen aus Fig. 5 identisch. Diese Schaltungsanordnung ist eine Kombination der in den Fig. 4 und 5 gezeigten Schaltungsanordnungen mit den dort beschriebenen Vorteilen und der gleichen Funktionalität wie in Fig. 5 beschrieben.

**Patentansprüche**

1. Schaltungsanordnung zur Stromeinspeisung in eine Fahrleitung (20) zur Energieversorgung elektrisch angetriebenerer Fahrzeuge aus einem 3-phasigen Wechselstromversorgungsnetz (10) sowie zur Rückspeisung aus der Fahrleitung (20) in das Wechselstromversorgungsnetz (10) bestehend aus mindestens einem Transformator (30, 34), einem mit der Fahrleitung direkt verbundenen Diodengleichrichter (40) zum Energiefluss in die Fahrleitung (20), einem Wechselrichterzelle (50) mit Zwischenkreis, einer Diode (60), deren Anode mit der Fahrleitung (20) verbunden ist und deren Kathode mit dem Zwischenkreis der Wechselrichterzelle (50) verbunden ist, wobei der Wechselrichter (5) weniger als die halbe, vorzugsweise ein viertel, der Nennleistung des Diodengleichrichters (40) aufweist und Energie aus der Fahrleitung (20) in das Wechselspannungsversorgungsnetz (10) zurückspeist.

2. Schaltungsanordnung nach Anspruch 1, wobei der Wechselrichter (5) aus einer Mehrzahl parallel und/oder in Reihe geschalteter Wechselrichterzellen (50) besteht, die ihrerseits aus einzelnen 3-phasen Wechselrichtern bestehen.

3. Schaltungsanordnung nach Anspruch 2, wobei bei parallel geschalteten Wechselrichterzellen (50) des Wechselrichters (5) allen Zellen eine Sekundärwicklung des Transformators (30) zugeordnet ist und diese identisch ist mit der dem Diodengleichrichter (40) zugeordneten Sekundärwicklung.

4. Schaltungsanordnung nach Anspruch 2, wobei bei in Reihe geschalteten Wechselrichterzellen (50) jeder Zelle eine eigene Sekundärwicklung mindestens eines Transformators (34) zugeordnet ist, wobei diese/r Transformator/en (34) unabhängig von dem Transformator (30) des Diodengleichrichters ist.

5. Schaltungsanordnung nach Anspruch 2, wobei bei einer matrixartigen Schaltung einer Mehrzahl von Wechselrichterzellen (50) jeder Parallelschaltung genau eine Sekundärwicklung mindestens eines Transformators (34) zugeordnet ist und der Serienschaltung dieser jeweils eine Sekundärwicklung zugeordnet ist.

6. Schaltungsanordnung nach Anspruch 2, wobei jeder 3-phasen Wechselrichter (50) besteht aus einem Gleichspannungszwischenkreis mit einem Zwischenkreiskondensator (52) sowie 3 Halbbrücken, die Ihrerseits aus je zwei Leistungsschaltern (54) mit antiparallel dazu geschalteten Freilaufdioden (56) bestehen und einen Mittenabgriff für die jeweilige Phase aufweisen.

7. Schaltungsanordnung nach Anspruch 6, wobei die Leistungsschalter (54) Insulated Gate Bipolar Transistoren (IGBT) sind.

## Claims

1. A circuit arrangement for the current supply to a contact line (20) for the power supply to electrically driven vehicles from a 3-phase alternating-current supply network (10) and the recovery from the contact line (20) into the alternating-current supply network (10), comprising at least one transformer (30, 34), a diode rectifier (40) for the energy flow into the contact line (20), said diode rectifier being connected directly to the contact line, an inverter cell (50) with intermediate circuit, a diode (60), whose anode is connected to the contact line (20) and whose cathode is connected to the intermediate circuit of the inverter cell (50), whereby the inverter (5) has less than half, preferably less than a quarter, of the rated power of the diode rectifier (40) and energy is recovered from the contact line (20) into the alternating-voltage supply network (10).

2. The circuit arrangement according to claim 1, whereby the inverter (5) comprises a plurality of inverter cells (50) connected in parallel and/or in series, said inverter cells for their part comprising individual 3-phase inverters.

3. The circuit arrangement according to claim 2, whereby, in the case of inverter cells (50) of the inverter (5) connected in parallel, there is assigned to all the cells a secondary winding of the transformer (30) and said secondary winding is identical to the secondary winding assigned to the diode rectifier (40).

4. The circuit arrangement according to claim 2, whereby, in the case of inverter cells (50) connected in series, there is assigned to each cell its own secondary winding of at least one transformer (34), whereby this/these transformer/s (34) is independent of the transformer (30) of the diode rectifier.

5. The circuit arrangement according to claim 2, whereby, in the case of a matrix-like circuit of a plurality of inverter cells (50), there is assigned to each parallel circuit precisely one secondary winding of at least one transformer (34) and, in each case, one secondary winding is assigned to the series circuit thereof.

6. The circuit arrangement according to claim 2, whereby each 3-phase inverter (50) comprises a direct-voltage intermediate circuit with an intermediate-circuit capacitor (52) as well as three half-bridges, which for their part comprise in each case two power switches (54) with recovery diodes (56) connected anti-parallel thereto and have a centre tap for the respective phase.

7. The circuit arrangement according to claim 6, whereby the power switches (54) are insulated gate bipolar transistors (IGBT).

## Revendications

1. Montage de circuits permettant d'alimenter en courant, à partir d'un réseau de distribution de courant alternatif triphasé (10), une caténaire (20) servant à fournir de l'énergie à des véhicules à entraînement électrique, et permettant également de réinjecter du courant depuis la caténaire (20) jusque dans le réseau de distribution de courant alternatif (10), lequel montage de circuits comprend : au moins un transformateur (30, 34) ; un redresseur à diodes (40) directement relié à la caténaire et servant à l'écoulement de l'énergie jusque dans la caténaire (20) ; une cellule de convertisseur (50) à circuit intermédiaire ; et une diode (60) dont l'anode est reliée à la caténaire (20) et dont la cathode est reliée au circuit intermédiaire de la cellule de convertisseur (50) ; le convertisseur (5) faisant moins de la moitié, de préférence un quart, de la puissance nominale du redresseur à diodes (40) et réinjectant de l'énergie issue de la caténaire (20) dans le réseau de distribution de tension alternative (10).

2. Montage de circuits selon la revendication 1, dans lequel le convertisseur (5) se compose d'une pluralité de cellules de convertisseur (50) montées en parallèle et/ou en série qui se composent elles-mêmes de convertisseurs triphasés distincts.

3. Montage de circuits selon la revendication 2, dans lequel, lorsque les cellules de convertisseur (50) du convertisseur (5) sont montées en parallèle, un enroulement secondaire du transformateur (30) est associé à toutes les cellules, et celui-ci est identique à l'enroulement secondaire associé au redresseur à diodes (40).

4. Montage de circuits selon la revendication 2, dans lequel, lorsque les cellules de convertisseur (50) sont montées en série, un enroulement secondaire d'au moins un transformateur (34) est affecté en propre à chaque cellule, ce ou ces transformateurs (34) étant indépendants du transformateur (30) du redresseur à diodes.

5. Montage de circuits selon la revendication 2, dans lequel, en cas de montage matriciel d'une pluralité de cellules de convertisseur (50), on associe à chaque montage en parallèle exactement un enroulement secondaire d'au moins un transformateur (34) et on associe chaque fois un enroulement secondaire au montage en série de celles-ci.

6. Montage de circuits selon la revendication 2, dans lequel chaque convertisseur triphasé (50) se compose d'un circuit intermédiaire à tension continue comprenant un condensateur de circuit intermédiaire (52) ainsi que trois demi-ponts qui, quant à eux, se composent chacun de deux commutateurs de puissance (54) avec des diodes de roue libre (56) montées antiparallèlement à ceux-ci, et qui comportent une prise centrale pour la phase respective.

7. Montage de circuits selon la revendication 6, dans lequel les commutateurs de puissance (54) sont des transistors bipolaires à grille isolée (IGBT pour insulated gate bipolar transistors).

Fig. 1a *(Stand der Technik)*

Fig. 1b [STAND DER TECHNIK]

Fig. 2

Fig. 3

EP 1 350 666 B1

Fig. 4

Fig. 5

Fig. 6